# FASCICULE DE BREVET EUROPEEN

(11) **EP 4 584 509 B1**
(45) Date de publication et mention de la délivrance du brevet: **27.05.2026**
(21) Numéro de dépôt: 23764893.6
(22) Date de dépôt: 01.09.2023
(51) Int. Cl.: F16C 7/06, B64C 1/14, F16C 29/00, F16C 29/02, F16C 33/20, F16C 33/28

(54) **BIELLE À RESSORT HYBRIDE À MOULAGE PLASTIQUE ET MÉCANISME BISTABLE COMPORTANT UNE TELLE BIELLE**
AUS KUNSTSTOFF GEGOSSENER HYBRIDFEDERSTAB UND BISTABILER MECHANISMUS MIT EINEM SOLCHEN STAB
PLASTIC-MOULDED HYBRID SPRING ROD AND BISTABLE MECHANISM COMPRISING SUCH A ROD

(30) Priorité: 09.09.2022 FR 2209050
(43) Date de publication de la demande: 16.07.2025
(73) Titulaire: Latecoere, 31500 Toulouse (FR)
(72) Inventeur: LOUVEL, Fabien, 31280 MONS (FR)
(74) Mandataire: Junca, Eric
(86) Numéro de dépôt international: PCT/EP2023/074075
(87) Numéro de publication internationale: WO 2024/052237

(56) Documents cités:
- WO-A1-2022/023212
- CH-A5- 692 733
- DE-A1- 102012 208 224
- DE-A1- 4 018 008
- DE-B3- 102011 084 066

## Description

### DOMAINE TECHNIQUE

L'invention se rapporte à une bielle à ressort dite hybride équipée d'un système de guidage de cette bielle, dont une partie est moulée en matériau plastique. Une telle bielle à ressort est utilisée notamment comme pièce de liaison dans des mécanismes d'ouverture/fermeture d'ouvrant ou de verrouillage, afin de s'assurer qu'un tel mécanisme reste en place même en cas de rupture de la chaîne de commande.

L'invention se rapporte également à un mécanisme ayant deux positions de stabilité dit bistable et dont au moins une pièce du mécanisme est constituée par ladite bielle à ressort hybride comportant une partie de son système de guidage en matériau plastique. Notamment des ouvrants de véhicules - aéronefs, trains, navires - sont destinés à être actionnés par un tel mécanisme bistable.

Dans le domaine aéronautique en particulier, les portes d'un aéronef sont des ouvrants actionnés par des mécanismes bistables et adaptées à occuper deux positions stables - ouverte ou fermée.

### ÉTAT DE LA TECHNIQUE

De manière générale, une bielle est une pièce mécanique dont le corps est de forme allongée et dotée d'une articulation à chacune de ses extrémités. La bielle est classiquement utilisée pour transmettre et transformer un mouvement en un autre mouvement ou d'en changer l'amplitude. L'ajout d'un ressort au corps de la bielle permet de fournir d'autres transformations du mouvement transmis, le corps de la bielle étant alors constitué de deux tubes emmanchés co-axialement et adaptés à coulisser l'un dans l'autre, formant le système de guidage : une telle bielle à ressort est alors particulièrement adaptée pour assurer une fonction bistable dans un mécanisme d'ouverture / fermeture d'ouvrant ou de verrouillage.

Plus spécifiquement, un tel mécanisme réalise l'entrainement d'une pièce mécanique pouvant se déplacer entre deux positions stables : lorsque la pièce est dans une position intermédiaire entre ces positions stables, elle est alors entrainée en général vers la position stable la plus proche par la bielle à ressort. Selon un premier exemple, une porte d'aéronef peut comporter un mécanisme bistable d'actionnement pour lequel les positions stables sont des positions extrêmes de la porte, à savoir en position fermée et en position ouverte. Sous l'action de ce mécanisme bistable, lorsque la porte est en position intermédiaire entrouverte, elle est entrainée soit vers sa position fermée, soit vers sa position ouverte.

Selon un autre exemple concernant également les portes d'aéronef, celles-ci peuvent comporter un mécanisme bistable de verrouillage équipé d'un levier se déplaçant entre une position de verrouillage et une position de déverrouillage : lorsque le levier est relâché entre la position de verrouillage et la position de déverrouillage, il bascule vers l'une ou l'autre de ces positions en fonction de la position dans laquelle il se trouve lorsqu'il est relâché.

Des mécanismes bistables sont couramment réalisés par des vérins à gaz. Cependant l'effort produit par un vérin à gaz dépend du comportement de son gaz dont les propriétés physiques et donc le comportement en compression varient avec la température. Or dans les applications aéronautiques, un aéronef est soumis à de grands écarts de températures pendant son utilisation - qui peuvent varier de -40°C à +7+0°C lors d'un seul vol. De plus un vérin à gaz comporte également un joint d'étanchéité mobile dont il est difficile de garantir l'étanchéité pendant toute la période d'exploitation de l'aéronef.

Pour surmonter les inconvénients des vérins à gaz, des bielles à ressort métallique dont le système de guidage est également métallique sont utilisées dans des mécanismes bistables : en effet, ces bielles à ressort sont plus fiables car leurs propriétés mécaniques varient très peu dans la plage de température d'utilisation et elles ne présentent pas de problème d'étanchéité. De telles bielles à ressort avec guidage métallique comportent de manière générique une articulation à chacune de leurs extrémités pour limiter les risques d'usure avec les autres pièces du mécanisme bistable auxquelles ces rotules sont attachées.

De plus le coulissement des tubes emmanchés du corps de la bielle produit de la friction non désirable et les matériaux métalliques sont susceptibles d'être soumis à des phénomènes de corrosion, ces deux facteurs entrainant l'application de revêtements et/ou l'utilisation de traitements de surface pour garantir un fonctionnement optimal de la bielle à ressort et du mécanisme bistable. Ces inconvénients augmentent la complexité de fabrication et d'installation de la bielle à ressort à système de guidage métallique ainsi que le poids du mécanisme bistable.

Les brevets CH692733, DE102012208224 et DE102011084066 divulguent une bielle à ressort avec des parties en métal et en plastique. Dans le brevet CH692733, l'axe et le corps coulissant de la bielle sont en métal et un chemisage en plastique faisant interface entre l'axe et le corps coulissant. Dans les brevets DE102012208224 et DE102011084066, l'axe est en plastique et le corps coulissant est en métal.

### EXPOSE DE L'INVENTION

Afin de remédier aux inconvénients de l'état de la technique exposés ci-dessus, l'invention a pour objectif principal d'améliorer la fabrication et la structure d'une bielle à ressort ainsi que de réaliser un mécanisme bistable optimisé en masse et plus facile à installer.

Pour ce faire, l'invention prévoit de réaliser une bielle à ressort hybride comportant un système de guidage dont le corps coulissant est moulé en matériau plastique autour d'un axe métallique. Avantageusement, ce choix de matériau permet de simplifier la fabrication de la bielle à ressort, tout en s'affranchissant de l'application de traitements de surface qui allonge la durée de fabrication et restent susceptibles de se dégrader dans le temps.

Plus précisément la présente invention a pour objet une bielle à ressort présentant deux extrémités et comportant :
- un système de guidage de la bielle constitué d'un axe métallique et d'un corps coulissant sur une zone le long de cet axe métallique ;
- un ressort de compression orienté dans la direction de l'axe métallique du système de guidage, et
- deux organes de liaison positionnés chacun à une des extrémités de la bielle à ressort sur respectivement le corps et l'axe métallique, les organes de liaison présentant une interface de reprise.

Dans cette bielle à ressort dite hybride métal/plastique, le corps coulissant et les organes de liaison sont moulés en plastique, l'organe de liaison du corps étant moulé d'une seule pièce avec le corps coulissant du système de guidage. De plus, les organes de liaison comportent chacun un épaulement perpendiculaire à la direction de l'axe métallique, le ressort de compression étant positionné au contact de ces épaulements et autour du système de guidage.

Avantageusement, une bielle à ressort hybride dont le système de guidage présente un corps plastique coulissant le long d'un axe métallique présente une réduction des frictions de coulissement permettant une fabrication plus rapide de cet axe métallique en s'affranchissant des traitements de surfaces visant à réduire les frictions. De plus une interface métal/plastique est faiblement sensible aux variations de température. Le moulage en matière plastique du corps du système de guidage simplifie également la fabrication de la bielle à ressort hybride, le moulage pouvant être effectué rapidement et à haute cadence.

Avantageusement également, le système de guidage hybride métal/plastique présente une densité et donc une masse inférieure à un système équivalent en métal, cet allègement étant particulièrement recherché dans le monde aéronautique. En effet, un gain de masse signifie soit une consommation d'hydrocarbures moindre soit une allocation de ce gain de masse à une autre partie de l'aéronef.

Selon des formes de réalisation préférées prises seule ou en combinaison :
- l'axe métallique présente un dépouillement angulaire sur la zone de coulissement ;
- l'angle de dépouillement est inférieur à 5° ;
- l'axe métallique comporte une collerette autour de laquelle est moulée son organe de liaison ;
- l'organe de liaison du corps présente un trou de drainage et l'organe de liaison de l'axe présente un trou de positionnement ;
- l'interface de reprise des organes de liaison est ouverte en forme de « U » ;
- le corps coulissant du système de guidage est moulé et optimisé selon une structure « lattice », c'est-à-dire en treillis.

Avantageusement, le dépouillement angulaire de l'axe métallique permet un jeu radial qui optimise le coulissement avec le corps plastique.

Avantageusement également, la collerette permet d'assembler l'organe de liaison de l'axe métallique à l'axe en s'affranchissant de tout moyen d'attache ou de fixation.

L'invention se rapporte également à un procédé de fabrication d'une bielle à ressort hybride comportant un corps coulissant moulé en matériau plastique autour de son axe métallique. La fabrication se déroule selon les étapes suivantes ;
- usinage de l'axe métallique ;
- installation de l'axe métallique dans un outillage comportant au moins un moule à injection ;
- positionnement de l'axe métallique sur une tige de positionnement dans l'outillage ;
- injection de matériau plastique dans le moule par au moins deux buses d'injection ;
- extraction du système de guidage de l'outillage ;
- séparation du corps coulissant plastique de l'axe métallique ;
- installation du ressort entre les épaulements, et
- mise en coulissement du corps coulissant plastique le long de l'axe métallique.

Avantageusement, ce procédé permet d'injecter la totalité des composants du système de guidage en une seule opération, puis de désolidariser le corps plastique de manière à obtenir rapidement une bielle à ressort fonctionnelle en un minimum de fabrication et d'installation.

Selon certaines formes de mise en œuvre privilégiées prises seule ou en combinaison :
- l'usinage de l'axe métallique comporte une étape de dépouillement angulaire ;
- la collerette est usinée avec l'axe métallique ;
- le moule comporte un mur de séparation définissant deux volumes de moulage correspondant respectivement au corps coulissant et à l'organe de liaison de l'axe, chacun de ces volumes de moulage étant alimenté par une buse d'injection.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1a et la figure 1b, une vue en perspective respectivement éclatée et assemblée d'une bielle à ressort hybride ;
- la figure 2, une vue en coupe de l'axe métallique illustrant le dépouillement ;
- la figure 3a, une vue en perspective du moule de moulage du corps plastique ;
- la figure 3b, une vue en perspective du corps plastique de la bielle à ressort après moulage, et
- la figure 4a, la figure 4b et la figure 4c, une vue en coupe dans le plan A du système de guidage de la bielle à ressort à trois instants successifs pendant la phase d'extraction du corps plastique de l'axe métallique.

### DESCRIPTION DETAILLEE

Sur les figures, des signes de référence identiques renvoient à un même élément ainsi qu'aux passages de la description correspondants.

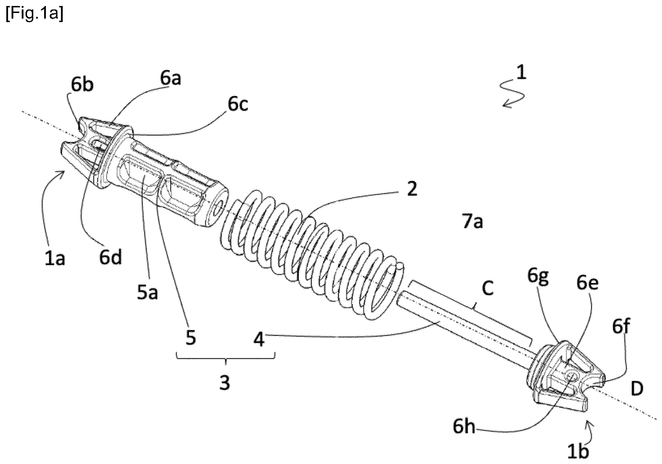

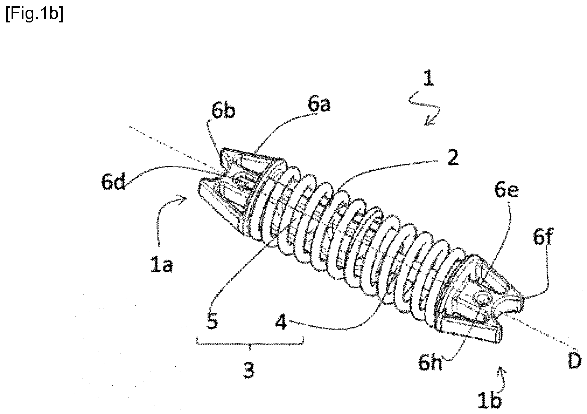

Les figures 1a et 1b montrent une vue en perspective d'une bielle à ressort 1 hybride, celle-ci étant représentée selon une vue éclatée dans la figure 1a et selon une vue assemblée dans la figure 1b. Cette bielle à ressort 1 est dite hybride dans la mesure où une partie de la bielle est métallique et une autre partie est en plastique.

La bielle à ressort 1 présente deux extrémités 1a et 1b et comporte :
- un système de guidage de bielle 3, constitué d'un axe métallique 4 et d'un corps coulissant plastique 5 s'étendant sur une zone C le long de cet axe métallique 4 ;
- un ressort 2 de compression orienté dans la direction D de l'axe métallique 4 du système de guidage 3, et
- deux organes de liaison 6a et 6e positionnés chacun à une des extrémités 1a, 1b de la bielle à ressort 1 sur, respectivement, le corps coulissant 5 et l'axe métallique 4, les organes de liaison 6a, 6b présentant une interface de reprise 6b, 6f.

Dans cet exemple de réalisation, l'axe métallique est en acier et le corps coulissant plastique est en polyamide 66 plus communément dénommé « nylon ». Cependant tout type d'alliage métallique (aluminium, titane, inconel, etc...) et tout type de matière plastique (polypropylène, polyéthylène, polyamides, élastomères, avec ou sans ajout de matière optimisée pour la friction type téflon ou autre, etc ...) adaptés peuvent être utilisés.

Plus précisément, ces interfaces de reprise 6b, 6f réalisent la liaison aux extrémités 1a et 1b entre la bielle à ressort 1 hybride et les autres pièces du mécanisme reliées par cette bielle, un mécanisme d'ouverture/fermeture de porte d'aéronef dans l'exemple de réalisation. Cette liaison est effectuée par contact, les interfaces de reprises 6b, 6f étant ouvertes vers les pièces du mécanisme selon une ouverture en forme de U.

En outre, l'organe de liaison 6a positionné sur le corps coulissant 5 est avantageusement moulé d'une seule pièce avec le corps coulissant 5 qui est lui-même moulé et optimisé en masse selon une structure lattice, cette optimisation permettant de limiter la quantité de plastique injectée et donc de réduire la durée de fabrication par moulage.

Par ailleurs, le corps coulissant 5 présentant classiquement une cavité 5a dans laquelle coulisse l'axe métallique 4, des fluides indésirables provenant de l'environnement peuvent s'y déverser, provoquant un mauvais fonctionnement de la bielle à ressort 1 hybride. Pour évacuer ces fluides, l'organe de liaison 6a présente avantageusement un trou de drainage 6d. L'organe de liaison 6d en extrémité de l'axe métallique 4 présente également une ouverture sous la forme, dans cet exemple, d'un trou de positionnement 6h issu du procédé de fabrication explicité plus bas.

Les épaulements 6c et 6g sur les organes de liaison respectifs 6a et 6e sont visibles sur la vue éclatée en figure 1a. Ces épaulements 6c, 6g sont positionnés perpendiculairement à la direction D de l'axe métallique 4, le ressort de compression 2 étant au contact des épaulements 6c, 6g et autour du système de guidage 3, comme représenté en figure 1b.

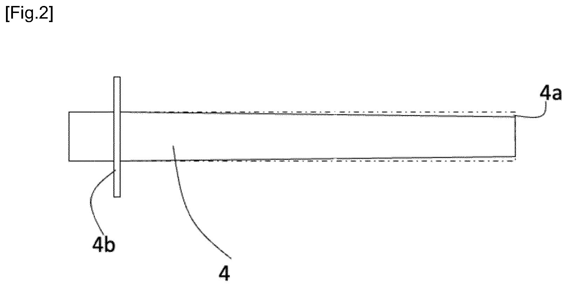

La figure 2 illustre l'axe métallique 4. Cet axe métallique 4 présente de préférence un dépouillement angulaire 4a sur la zone C de coulissement, dépouillement de 2 degrés dans l'exemple de réalisation, de préférence inférieur à 5 degrés. Ce dépouillement permet un meilleur coulissement du corps coulissant 5 le long de l'axe métallique 4 en limitant les risques de blocage du système de guidage 3.

De plus, l'axe métallique 4 comporte une collerette 4b, agencée perpendiculairement à l'axe D, autour de laquelle est moulée son organe de liaison 6e. La collerette 4b permet de s'affranchir de moyen de liaison entre l'axe métallique 4 et l'organe de liaison 6e. Cette collerette peut être usinée directement en même temps que l'axe métallique 4 ou être une pièce indépendante fixée sur cet axe.

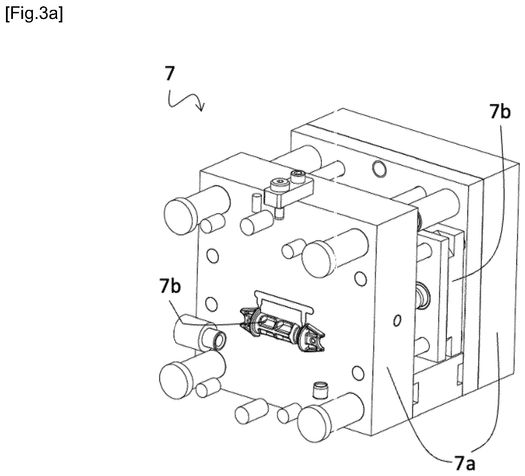

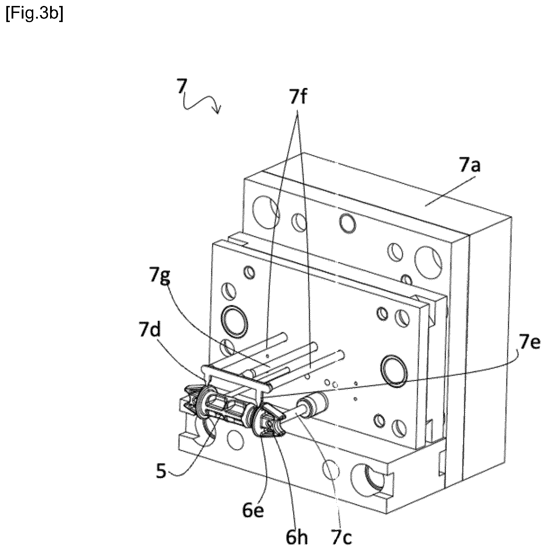

En référence à la figure 3a, il apparaît l'outillage 7 utilisé pour le moulage en matériau plastique du corps coulissant 5 du système de guidage 3 et des organes de liaison 6a, 6e (cf. figure 1a) de la bielle à ressort hybride 1. En complément, la figure 3b présente plus en détail l'extraction du système de guidage 3 de l'outillage 7 lors du démoulage. Cet outillage 7 comporte une presse 7a permettant l'acheminement de la matière plastique dans le moule 7b à l'aide de buses d'injection 7d, 7e via des tiges d'acheminement 7f. Les buses 7d, 7e sont positionnées et installées sur la tige de d'extraction 7g. Cette tige d'extraction 7g permet de pousser sur la matière plastique et éjecter le système de guidage 3 de l'outillage 7.

En fonctionnement, la fabrication par injection de matière plastique autour de l'axe métallique de la bielle à ressort 1 hybride se déroule selon les étapes suivantes :
- usinage de l'axe métallique 4 ;
- installation de l'axe métallique 4 dans l'outillage 7 comportant le moule 7a à injection ;
- positionnement de l'axe métallique 4 sur la tige 7c de positionnement dans l'outillage 7 ;
- injection de matériau plastique dans le moule 7b par les buses 7d, 7e d'injection ;
- extraction du système de guidage 3 de l'outillage 7;
- séparation du corps coulissant plastique 5 de l'axe métallique 4 ;
- installation du ressort 2 entre les épaulements 6c et 6g, et
- mise en coulissement du corps coulissant 5 plastique le long de l'axe métallique 4.

L'axe métallique 4 est obtenu traditionnellement par tournage, cet outillage permettant d'usiner en même temps la collerette 4b et le dépouillement angulaire 4a. L'axe métallique 4 peut également être obtenu par extrusion, la collerette 4b étant fabriquée séparément puis assemblée à l'axe métallique 4 par soudure ou fixation.

L'axe métallique 4 est ensuite installé dans le moule 7b en butée de la tige 7c de positionnement. Le plastique injecté va donc entourer la tige 7c et lors de l'étape d'extraction du système de guidage 3 de l'outillage, l'espace occupé par la tige 7c est vide et réalise le trou de positionnement 6h (cf. figure 1b). D'autres méthodes de positionnement de l'axe métallique 4 dans le moule sont possibles, en particulier par fixation de l'axe métallique 4 dans le tronçon qui ne sera pas recouvert de plastique. La tige 7c peut également être retirée après avoir positionné et sécurisé l'axe métallique 4. Dans ces modes de réalisation, aucun trou de positionnement n'est réalisé, le plastique étant injecté dans tout le volume de l'organe de liaison 6e.

L'outillage 7 comporte ici un seul moule 7a pour réaliser d'une part le corps coulissant 5 avec l'organe de liaison 6a et d'autre part l'organe de liaison 6e solidaire de l'axe métallique 4 au tour de la collerette 4b. Le moule 7a est donc utilisé pour mouler deux pièces distinctes, le corps coulissant 5 et l'axe métallique 4 avec leur organe de liaison respectif, et comporte un mur de séparation qui définit et isole deux volumes de moulage correspondant respectivement au corps coulissant 5 et à l'organe de liaison 6e de l'axe métallique 4. Chacun de ces volumes de moulage est alimenté par sa propre buse 7d, 7e d'injection car le mur de séparation bloque le passage du plastique injecté d'un volume de moulage à l'autre. Alternativement, l'outillage 7 peut comporter deux moules juxtaposés, chacun alimenté par une buse indépendante.

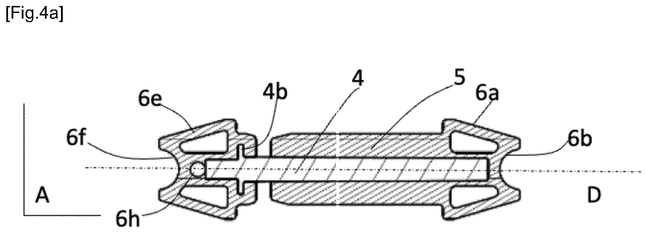

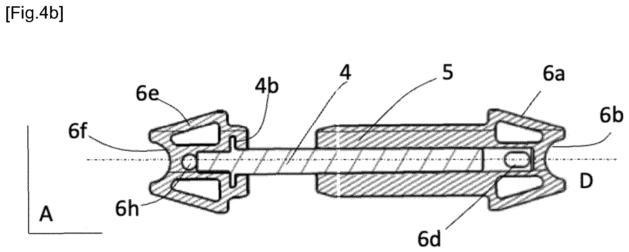

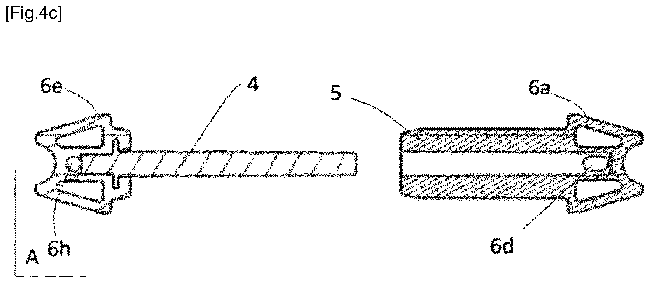

La figure 4a, figure 4b et figure 4c présentent des vues en coupe du système de guidage 3 dans un plan A longitudinal de la bielle à ressort hybride 1 à trois instants successifs pendant la phase d'extraction par séparation du corps coulissant 5 de l'axe métallique 4. Au début de cette phase en référence à la figure 4a, le corps coulissant 5 et l'axe métallique 4 sont assemblés à la suite de l'injection de plastique dans le moule 7b.

L'axe métallique 4 est ensuite extrait progressivement du corps coulissant 5 (figure 4b), cette extraction étant facilitée par le dépouillement angulaire 4a. Le moule 7b incorpore directement le trou de drainage 6d : le trou de drainage 6d traversant de part et d'autre le corps coulissant 5 se libère de lui-même lors de l'extraction de l'axe. La figure 4c montre la séparation complète de l'axe métallique 4 du corps coulissant 5. La vue en coupe de ces figures permet de visualiser la collerette 4b ainsi que l'organe de liaison 6e moulé autour de cette collerette 4b. Alternativement, si le moule 7b n'incorpore pas le trou de drainage, une étape de perçage du trou de drainage est alors réalisée.

## Revendications

1. Bielle à ressort hybride métal/plastique (1) présentant deux extrémités (1a, 1b) et comportant :
- un système de guidage (3) de la bielle constitué d'un axe métallique (4) et d'un corps coulissant (5) sur une zone C le long de cet axe métallique (4) ;
- un ressort (2) de compression orienté dans la direction D de l'axe métallique (4) du système de guidage (3), et
- deux organes de liaison (6a, 6e) positionnés chacun à une des extrémités (1a, 1b) de la bielle à ressort (1) sur respectivement le corps coulissant (5) et l'axe métallique (4), les organes de liaison (6a, 6e) présentant une interface de reprise (6b, 6f) ;
la bielle à ressort (1) étant **caractérisée en ce que** le corps coulissant (5) et les organes de liaison (6a, 6e) sont moulés en matériau plastique, l'organe de liaison (6a) du corps coulissant (5) étant moulé d'une seule pièce avec le corps coulissant (5) du système de guidage (3), et **en ce que** les organes de liaison (6a, 6e) comportent chacun un épaulement (6c, 6g) perpendiculaire à la direction D de l'axe métallique (4), le ressort de compression étant positionné au contact de ces épaulements (6c, 6g) et autour du système de guidage (3).

2. Bielle à ressort hybride (1) selon la revendication 1, dans laquelle l'axe métallique (4) présente un dépouillement angulaire (4a) sur la zone C de coulissement.

3. Bielle à ressort hybride (1) selon la revendication 2, dans laquelle l'angle de dépouillement (4a) est inférieur à 5°.

4. Bielle à ressort hybride (1) selon l'une quelconque de la revendication 1 à la revendication 3, dans laquelle l'axe métallique (4) comporte une collerette (4b) autour de laquelle est moulée son organe de liaison (6e).

5. Bielle à ressort hybride (1) selon l'une quelconque de la revendication 1 à la revendication 4, dans laquelle l'organe de liaison (6a) du corps coulissant (5) présente un trou de drainage (6d) et l'organe de liaison (6e) de l'axe métallique (4) comporte un trou de positionnement (6h).

6. Bielle à ressort hybride (1) selon l'une quelconque de la revendication 1 à la revendication 5, dans laquelle l'interface de reprise (6b, 6f) des organes de liaison (6a, 6e) est ouverte en forme de « U ».

7. Bielle à ressort hybride (1) selon l'une quelconque de la revendication 1 à la revendication 6, dans laquelle le corps coulissant (5) du système de guidage (3) est moulé et optimisé selon une structure lattice.

8. Procédé de fabrication d'une bielle à ressort hybride (1) comportant un corps coulissant (5) moulé en matériau plastique autour de son axe métallique (4) selon l'une quelconque des revendications précédentes, **caractérisé en ce que** la fabrication se déroule selon les étapes suivantes :
- usinage de l'axe métallique (4) ;
- installation de l'axe métallique (4) dans un outillage (7) comportant au moins un moule (7b) à injection ;
- positionnement de l'axe métallique (4) sur une tige (7c) de positionnement dans l'outillage (7) ;
- injection de matériau plastique dans le moule (7b) par au moins deux buses (7d, 7e) d'injection ;
- extraction du système de guidage (3) de l'outillage (7) ;
- séparation du corps coulissant (3) plastique de l'axe métallique (4) ;
- installation du ressort (2) entre les épaulements (6c, 6g), et
- mise en coulissement du corps coulissant (5) plastique le long de l'axe métallique (4).

9. Procédé de fabrication selon la revendication précédente, dans laquelle l'étape d'usinage de l'axe métallique (4) comporte une étape de dépouillement angulaire inférieur à 5 degrés.

10. Procédé de fabrication selon l'une quelconque de la revendication 8 à la revendication 9, dans laquelle l'étape d'usinage de l'axe métallique (4) comporte une étape d'usinage de la collerette (4b).

11. Procédé de fabrication selon l'une quelconque de la revendication 8 à la revendication 10, dans laquelle le moule (7b) comporte un mur de séparation définissant deux volumes de moulage correspondant respectivement au corps coulissant (5) et à l'organe de liaison (6e) de l'axe métallique (4), chacun de ces volumes de moulage étant alimenté par une buse d'injection (7d, 7e).

## Patentansprüche

1. Metall-Kunststoff-Hybridfederstab (1), welcher zwei Enden (1a, 1b) aufweist und umfasst:
- ein Führungssystem (3) des Stabes, das aus einer Metallachse (4) und einem auf einem Bereich C entlang dieser Metallachse (4) gleitenden Gleitkörper (5) besteht;
- eine Druckfeder (2), die in der Richtung D der Metallachse (4) des Führungssystems (3) ausgerichtet ist, und
- zwei Verbindungsorgane (6a, 6e), die jeweils an einem der Enden (1a, 1b) des Federstabes (1) auf dem Gleitkörper (5) bzw. der Metallachse (4) positioniert sind, wobei die Verbindungsorgane (6a, 6e) eine Aufnahmeschnittstelle (6b, 6f) aufweisen;
wobei der Federstab (1) **dadurch gekennzeichnet ist, dass** der Gleitkörper (5) und die Verbindungsorgane (6a, 6e) aus Kunststoff geformt sind, wobei das Verbindungsorgan (6a) des Gleitkörpers (5) mit dem Gleitkörper (5) des Führungssystems (3) einstückig geformt ist, und dadurch, dass die Verbindungsorgane (6a, 6e) jeweils einen Ansatz (6c, 6g) umfassen, der senkrecht zur Richtung D der Metallachse (4) ist, wobei die Druckfeder im Kontakt mit diesen Ansätzen (6c, 6g) und um das Führungssystem (3) herum positioniert ist.

2. Hybridfederstab (1) nach Anspruch 1, wobei die Metallachse (4) auf dem Gleitbereich C eine Formverjüngung (4a) aufweist.

3. Hybridfederstab (1) nach Anspruch 2, wobei der Winkel der Verjüngung (4a) kleiner als 5° ist.

4. Hybridfederstab (1) nach einem der Ansprüche 1 bis 3, wobei die Metallachse (4) einen Flansch (4b) umfasst, um den herum ihr Verbindungsorgan (6e) geformt ist.

5. Hybridfederstab (1) nach einem der Ansprüche 1 bis 4, wobei das Verbindungsorgan (6a) des Gleitkörpers (5) ein Ablaufloch (6d) aufweist und das Verbindungsorgan (6e) der Metallachse (4) ein Positionierloch (6h) umfasst.

6. Hybridfederstab (1) nach einem der Ansprüche 1 bis 5, wobei die Aufnahmeschnittstelle (6b, 6f) der Verbindungsorgane (6a, 6e) offen in Form eines "U" ist.

7. Hybridfederstab (1) nach einem der Ansprüche 1 bis 6, wobei der Gleitkörper (5) des Führungssystems (3) gemäß einer Gitterstruktur geformt und optimiert ist.

8. Verfahren zur Herstellung eines Hybridfederstabes (1), der einen aus Kunststoff um seine Metallachse (4) herum geformten Gleitkörper (5) umfasst, nach einem der vorhergehenden Ansprüche, **dadurch gekennzeichnet, dass** die Herstellung gemäß den folgenden Schritten erfolgt:
- Bearbeitung der Metallachse (4);
- Anbringung der Metallachse (4) in einem Werkzeug (7), das mindestens eine Spritzform (7b) umfasst;
- Positionierung der Metallachse (4) auf einer Positionierstange (7c) in dem Werkzeug (7);
- Spritzen von Kunststoff in die Form (7b) durch mindestens zwei Spritzdüsen (7d, 7e);
- Entnahme des Führungssystems (3) aus dem Werkzeug (7);
- Trennung des Gleitkörpers (3) aus Kunststoff von der Metallachse (4);
- Anbringung der Feder (2) zwischen den Ansätzen (6c, 6g), und
- Anbringung des Gleitkörpers (5) aus Kunststoff zum Gleiten entlang der Metallachse (4).

9. Herstellungsverfahren nach dem vorhergehenden Anspruch, wobei der Schritt der Bearbeitung der Metallachse (4) einen Schritt des Verjüngens mit einem Winkel, der kleiner als 5° ist, umfasst.

10. Herstellungsverfahren nach einem der Ansprüche 8 bis 9, wobei der Schritt der Bearbeitung der Metallachse (4) einen Schritt der Bearbeitung des Flansches (4b) umfasst.

11. Herstellungsverfahren nach einem der Ansprüche 8 bis 10, wobei die Form (7b) eine Trennwand umfasst, die zwei Spritzgussvolumina definiert, die dem Gleitkörper (5) bzw. dem Verbindungsorgan (6e) der Metallachse (4) entsprechen, wobei jedes dieser Spritzgussvolumina von einer Spritzdüse (7d, 7e) gespeist wird.

## Claims

1. A metal/plastic hybrid spring connecting rod (1) having two ends (1a, 1b) and comprising:
- a spring connecting rod guiding system (3) comprising a metal shaft (4) and a sliding body (5) over a zone C along said metal shaft (4);
- a compression spring (2) oriented in the direction D of the metal shaft (4) of the guiding system (3), and
- two connecting members (6a, 6e) each positioned at one of the ends (1a, 1b) of the spring connecting rod (1) on the sliding body (5) and the metal shaft (4) respectively, the connecting members (6a, 6e) having a load-bearing interface (6b, 6f);
the spring connecting rod (1) being **characterised in that** the sliding body (5) and the connecting members (6a, 6e) are moulded from plastic, the connecting member (6a) of the sliding body (5) being moulded in one piece with the sliding body (5) of the guiding system (3), and **in that** the connecting members (6a, 6e) each comprise a shoulder (6c, 6g) perpendicular to the direction D of the metal shaft (4), the compression spring being positioned in contact with these shoulders (6c, 6g) and around the guiding system (3).

2. Hybrid spring connecting rod (1) according to claim 1, wherein the metal shaft (4) has an angular relief (4a) in the sliding zone C.

3. Hybrid spring connecting rod (1) according to claim 2, wherein the relief angle (4a) is less than 5°.

4. Hybrid spring connecting rod (1) according to any one of claims 1 to 3, wherein the metal shaft (4) comprises a flange (4b) around which its connecting member (6e) is moulded.

5. Hybrid spring connecting rod (1) according to any one of claims 1 to 4, wherein the connecting member (6a) of the sliding body (5) has a drainage hole (6d) and the connecting member (6e) of the metal shaft (4) comprises a positioning hole (6h).

6. A hybrid spring connecting rod (1) according to any one of claims 1 to 5, wherein the load-bearing interface (6b, 6f) of the connecting members (6a, 6e) is open in a 'U' shape.

7. Hybrid spring connecting rod (1) according to any one of claims 1 to 6, wherein the sliding body (5) of the guiding system (3) is moulded and optimised according to a lattice structure.

8. A method of manufacturing a hybrid spring connecting rod (1) comprising a sliding body (5) moulded from plastic material around its metal shaft (4) according to any one of the preceding claims, **characterised in that** the manufacture is carried out in accordance with the following steps:
- machining of the metal shaft (4);
- installation of the metal shaft (4) in a moulding tool (7) comprising at least one injection mould (7b);
- positioning the metal shaft (4) on a positioning rod (7c) within the moulding tool (7);
- injection of plastic material into the mould (7b) via at least two injection nozzles (7d, 7e);
- removal of the guiding system (3) from the mould (7);
- separating the plastic sliding body (5) from the metal shaft (4);
- installation of the spring (2) between the shoulders (6c, 6g), and
- sliding the plastic sliding body (5) along the metal shaft (4).

9. A manufacturing method according to the preceding claim, wherein the machining step of the metal shaft (4) comprises a step of creating an angular relief of less than 5 degrees.

10. A method of manufacture according to any one of claims 8 to 9, wherein the step of machining the metal shaft (4) comprises a step of machining the flange (4b).

11. A manufacturing method according to any one of claims 8 to 10, wherein the mould (7b) comprises a partition wall defining two moulding cavities corresponding respectively to the sliding body (5) and the connecting member (6e) of the metal shaft (4), each of these moulding cavities being fed by an injection nozzle (7d, 7e).
